# EUROPÄISCHE PATENTSCHRIFT

(11) **EP 2 229 085 B1**
(45) Veröffentlichungstag und Bekanntmachung des Hinweises auf die Patenterteilung: **06.07.2011**
(21) Anmeldenummer: 08700522.9
(22) Anmeldetag: 14.01.2008
(51) Int. Cl.: A47J 41/00

(54) **DOPPELWANDIGES GEFÄSS MIT DRUCKAUSGLEICHSÖFFNUNG**
DOUBLE-WALLED VESSEL HAVING PRESSURE EQUALIZATION OPENING
RÉSERVOIR À DOUBLE PAROI POSSÉDANT UNE OUVERTURE D'ÉGALISATION DE PRESSION

(43) Veröffentlichungstag der Anmeldung: 22.09.2010
(73) Patentinhaber: PI-DESIGN AG, 6234 Triengen (CH)
(72) Erfinder: BODUM, Jørgen, 6045 Meggen (CH)
(74) Vertreter: Detken, Andreas
(86) Internationale Anmeldenummer: PCT/CH2008/000017
(87) Internationale Veröffentlichungsnummer: WO 2009/089636

(56) Entgegenhaltungen:
- EP-A- 0 717 949
- WO-A-2006/005002
- DE-U1- 9 005 464

## Beschreibung

### Technisches Gebiet

Die vorliegende Erfindung betrifft ein doppelwandiges Gefäss mit einem äusseren Gefässkörper und einem darin angeordneten inneren Gefässkörper, so dass zwischen den Gefässkörpern ein gasgefüllter, wärmeisolierender Zwischenraum vorhanden ist. Ein solches doppelwandiges Gefäss kann insbesondere aus Glas gefertigt sein.

### Stand der Technik

Aus der EP-A-0 717 949 ist ein doppelwandiges Gefäss bekannt, dessen äusserer Gefässkörper eine Durchgangsöffnung aufweist. Diese dient dazu, nach dem Verbinden des inneren und des äusseren Gefässkörpers ein Gas mit einer niedrigen Wärmeleitfähigkeit in den Zwischenraum zwischen den Gefässkörpern einzubringen. Nach diesem Gasaustausch wird die Öffnung durch einen Klebstofftropfen und optional zusätzlich durch eine Dichtungsplatte verschlossen.

Wenn ein derartiges Gefäss starken Temperaturschwankungen ausgesetzt wird, ändert sich der Druck des im Zwischenraum zwischen den Gefässkörpern befindlichen Gases. Diese Druckänderungen führen einerseits zu Spannungen im Material des Gefässes, die im Extremfall zum Bersten des Gefässes führen können. Andererseits können ständige Druckschwankungen dazu führen, dass der Klebstoffstopfen bei längerem Gebrauch undicht wird und dass dadurch Flüssigkeit in den Zwischenraum eindringen kann. Dadurch wird das Gefäss praktisch unbrauchbar.

WO-A-2006/005002 offenbart ein doppelwandiges Gefäss, dessen äusserer Gefässkörper eine Evakuierungsöffnung aufweist. Durch diese Öffnung wird der Zwischenraum zwischen dem inneren und dem äusseren Gefäss evakuiert. Anschliessend wird die Öffnung verschlossen. Ein Druckausgleich ist nicht vorgesehen.

### Darstellung der Erfindung

Es ist daher eine Aufgabe der vorliegenden Erfindung, ein doppelwandiges Gefäss anzugeben, das auf eine einfache Weise übermässige Druckschwankungen im Zwischenraum zwischen den Gefässkörpern verhindert. Diese Aufgabe wird durch ein doppelwandiges Gefäss mit den Merkmalen des Anspruchs 1 gelöst.

Es ist eine weitere Aufgabe der vorliegenden Erfindung, ein Verfahren zur Herstellung eines derartigen doppelwandigen Gefässes anzugeben. Diese Aufgabe wird durch ein Verfahren mit den Merkmalen des Anspruchs 9 gelöst.

Vorteilhafte Ausgestaltungen sind in den abhängigen Ansprüchen angegeben.

Es wird also ein doppelwandiges Gefäss zur Verfügung gestellt, welches einen äusseren Gefässkörper und einen inneren Gefässkörper aufweist. Der Innere Gefässkörper ist derart im äusseren Gefässkörper angeordnet, dass zwischen dem inneren und dem äusseren Gefässkörper ein gasgefüllter Zwischenraum ausgebildet ist. In einer Wand mindestens eines der Gefässkörper, bevorzugt in der den Boden bildenden Wand des äusseren Gefässkörpers, ist eine Druckausgleichsöffnung vorhanden, welche insbesondere dazu dient, beim Zusammenfügen der beiden Gefässkörper einen Gasaustausch zum Druckausgleich zwischen dem Zwischenraum und dem Aussenraum zuzulassen. Diese Druckausgleichsöffnung ist durch einen Stopfen verschlossen, um zu verhindern, dass Feuchtigkeit in den Zwischenraum eindringt. Um dennoch weiterhin einen Druckausgleich zwischen dem Zwischenraum und dem Aussenraum zu ermöglichen, weist der Stopfen mindestens einen sich durch diesen hindurch erstreckenden Gasdurchtrittskanal auf, der bei Druckunterschieden einen Durchlass von Gas, insbesondere von Luft, erlaubt, während er einen Durchlass von Flüssigkeiten, insbesondere von Wasser, verhindert.

Ein solches Gefäss wird vorzugsweise hergestellt, indem zunächst der äussere und der innere Gefässkörper bereitgestellt werden, wobei mindestens einer dieser Gefässkörper eine Begrenzungswand mit einer Druckausgleichsöffnung aufweist. Der innere Gefässkörper wird sodann im äusseren Gefässkörper angeordnet und mit diesem verbunden. Dies geschieht vorzugsweise dadurch, dass der innere und der äussere Gefässkörper in mindestens einem Bereich, vorzugsweise in einem oberen Randbereich, der beiden Gefässkörper, miteinander verschmolzen oder verschweisst werden. Dabei entsteht ein gasgefüllter Zwischenraum zwischen den beiden Gefässkörpern. Während die Gefässkörper miteinander verbunden werden, ermöglicht die Druckausgleichsöffnung einen Gasaustausch zwischen dem Zwischenraum und dem Aussenraum, sodass im Zwischenraum kein Über- oder Unterdruck entstehen kann. Nachdem die Gefässkörper miteinander verbunden wurden, kann der Zwischenraum optional mit einem Gas, zum Beispiel Luft oder einem Inertgas wie Stickstoff, durch die Druckausgleichsöffnung hindurch gespült werden. Anschliessend wird die Druckausgleichsöffnung durch den Stopfen verschlossen.

Die vorliegende Erfindung bietet besondere Vorteile, wenn der innere und der äussere Gefässkörper aus Glas gefertigt sind. In diesem Fall ist die Druckausgleichsöffnung besonders wichtig, um Spannungen während der Herstellung und insbesondere während des Verschmelzens der beiden Gefässkörper zu vermeiden. Prinzipiell ist es aber auch denkbar, dass die Gefässkörper aus einem anderen Material bestehen, zum Beispiel aus Edelstahl oder Kunststoff.

Der Stopfen kann z.B. aus einem elastischen Kunststoffmaterial bestehen und in einem Spritzgussverfahren, einem Formpressverfahren oder einem Spritzpressverfahren hergestellt werden, also in einem Verfahren, bei dem ein Kunststoff oder ein Vorläufer dieses Kunststoffs in eine Form eingefüllt wird und anschliessend aushärtet. Insbesondere ist es vorteilhaft, den Gasdurchtrittskanal erst auszubilden, nachdem das Stopfenmaterial zumindest teilweise ausgehärtet ist, z.B. indem der Stopfen mit einer Nadel durchstossen wird.

Um sicherzustellen, dass kein Wasser durch den Gasdurchtrittskanal gelangen kann, ist der Stopfen vorzugsweise aus einem hydrophoben Material gefertigt (also aus einem Material, welches mit Wasser einen Kontaktwinkel von mehr als 90° bildet). Die Abmessungen des Gasdurchtrittskanals sind dann so gewählt, dass die Kapillarwirkung im Kanal den Durchtritt von Wasser wirksam verhindert. Der Durchmesser des Gasdurchtrittskanals beträgt z.B. höchstens ca. 0.1 mm bei einer Länge von mindestens ca. 1 mm für Silikonkunststoff oder ein Material mit ähnlichen hydrophoben Eigenschaften. Selbstverständlich sind aber auch andere Abmessungen möglich.

Der Druckausgleichskanal kann insbesondere selbstverschliessend ausgebildet sein, das heisst er öffnet sich nur aufgrund einer Druckdifferenz zwischen dem Zwischenraum und dem Aussenraum und ist ohne eine solche Druckdifferenz verschlossen. Diese Eigenschaft kann insbesondere durch die vorstehend beschriebene Herstellung des Kanals mittels Durchstechen erreicht werden. Nach dem Zurückziehen der Nadel verschliesst sich ein solcher Kanal bei entsprechender Elastizität des Stopfenmaterials selbsttätig. Sobald zwischen dem Zwischenraum der Gefässkörper und dem Aussenraum ein gewisser Druckunterschied auftritt, weitet sich der Gasdurchtrittskanal aufgrund dieser Druckdifferenz genügend auf, um ein Gasdurchtritt zu ermöglichen. Der Kanal bleibt aber dennoch jederzeit in seinem Durchmesser genügend klein, dass aufgrund der hydrophoben Eigenschaften des Materials und der daraus resultierenden negativen Kapillarität kein Wasserdurchtritt möglich ist.

Als Material für den Stopfen wird besonders bevorzugt ein silikonbasierter Kunststoff oder ein Material mit vergleichbaren Eigenschaften ausgewählt. Aufgrund seiner hohen Elastizität und seiner hydrophoben Eigenschaften lässt sich in einem Stopfen aus Silikonkunststoff besonders gut ein Gasdurchtrittskanal ausbilden, der den Durchlass von Gas erlaubt, während er einen Durchlass von Wasser verhindert. Die Verwendung eines Stopfens aus Silikonkunststoff ist dann besonders vorteilhaft, wenn die Gefässkörper aus Glas gefertigt sind, da sich Glas und Silikonkunststoff aufgrund ihrer ähnlichen chemischen Zusammensetzung sehr gut dauerhaft miteinander verbinden lassen.

Der Stopfen ist bevorzugt mit demjenigen Gefässkörper, in welchem die Druckausgleichsöffnung vorhanden ist, verklebt und insbesondere mit einem Klebemittel auf Acetoxy-Silikonbasis an diesem Gefässkörper befestigt. Aufgrund seiner chemisch mit Silikonkautschuk verwandten Zusammensetzung ist ein solches Klebemittel besonders geeignet, eine dauerhafte Verbindung mit einem Silikonstopfen einzugehen. Insbesondere eignet sich ein solches Klebemittel auch hervorragend zu einer Verbindung mit einem Gefässkörper aus Glas, welches ebenfalls über eine ähnliche chemische Zusammensetzung verfügt.

Der Stopfen kann insbesondere in Form einer flachen Platte mit einem sich von dieser Platte aus in die Druckausgleichsöffnung hinein erstreckenden zapfenartigen Hauptabschnitt ausgebildet sein. In anderen Worten umfasst der Stopfen in diesem Fall einen Hauptabschnitt, durch welchen hindurch sich der Gasdurchtrittskanal erstreckt, sowie einen den Hauptabschnitt lateralen umgebenden Befestigungsflansch, welcher zumindest bereichsweise flach auf der Wand des Gefässkörpers aufliegt und vorzugsweise mit dieser Wand verklebt ist. Der zapfenartige Hauptabschnitt ist bevorzugt von zylindrischer Form und weist vorzugsweise einen maximalen Aussendurchmesser auf, der kleiner ist als der minimale Innendurchmesser der Druckausgleichsöffnung, so dass zwischen dem Hauptabschnitt und dem Wandbereich des Gefässkörpers, welcher die Druckausgleichsöffnung begrenzt, ein lateraler Zwischenraum vorhanden ist. Dies bietet insbesondere dann Vorteile, wenn die Druckausgleichsöffnung in ihren Abmessungen erhebliche Toleranzen aufweist, wie dies insbesondere bei Glasgefässen der Fall ist. Der zapfenartige Hauptabschnitt kann dann unabhängig von den genauen Abmessungen der Druckausgleichsöffnung in diese ohne Kraftaufwand eingeführt werden. Die Verbindung des Stopfens mit der Gefässwand erfolgt dann ausschliesslich über den Befestigungsflansch.

In einer alternativen Ausgestaltung ist der Stopfen scheiben- oder zylinderförmig und weist an seiner umlaufenden Mantelfläche eine umlaufende Ringnut auf, in welche der Wandbereich des Gefässkörpers hineinragt, welcher die Druckausgleichsöffnung begrenzt. Der Stopfen ist in diesem Falle also mit Hilfe der Ringnut wenigstens teilweise formschlüssig in der Druckausgleichsöffnung gehalten. Zusätzlich wird der Stopfen auch in dieser Ausführungsform vorzugsweise mit der Gefässwand verklebt. Eine solche Ausgestaltung des Stopfens eignet sich insbesondere für Druckausgleichsöffnungen mit geringen Toleranzen in Form und Abmessungen.

### Kurze Beschreibung der Zeichnungen

Bevorzugte Ausführungsformen der Erfindung werden im Folgenden anhand der Zeichnungen beschrieben, in denen zeigen:
- Fig. 1: einen zentralen Längsschnitt durch ein doppelwandiges Gefäss;
- Fig. 2: eine perspektivische Teilansicht des Gefässes der Fig. 1 im Teil- schnitt;
- Fig. 3: eine vergrösserte Detailansicht des Bodenbereichs der Fig. 1; so- wie
- Fig. 4: eine vergrösserte Detailansicht des Bodenbereichs eines doppel- wandigen Gefässes gemäss einer alternativen Ausführungsform.

### Ausführliche Beschreibung bevorzugter Ausführungsformen

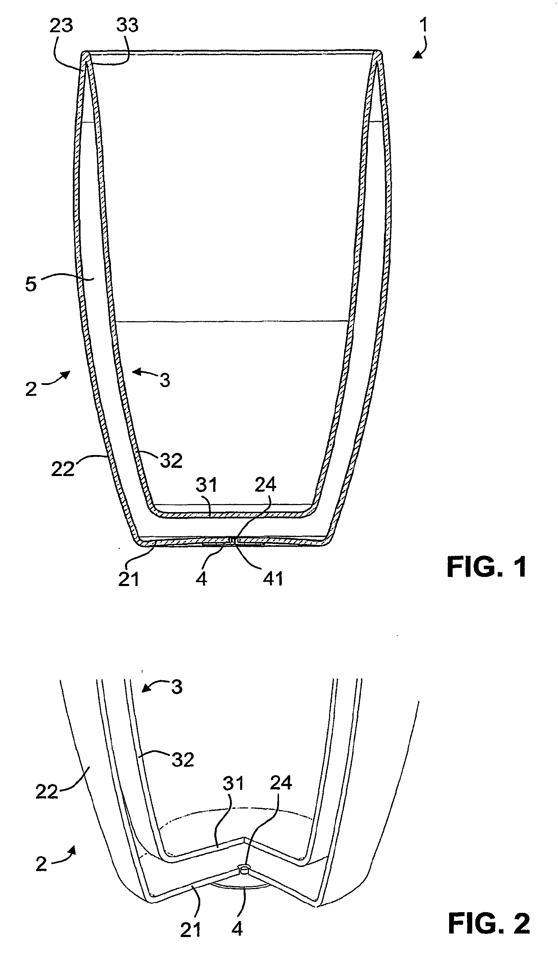

In den Figuren 1 bis 3 ist ein erstes Ausführungsbeispiel eines doppelwandigen Gefässes gemäss der vorliegenden Erfindung angegeben. Das Gefäss 1 ist aus einem äusseren Gefässkörper 2 aus Silikatglas und einem darin aufgenommenen inneren Gefässkörper 3 aus demselben Material gebildet. Die beiden Gefässkörper sind an ihren jeweiligen oberen Enden 23, 33 miteinander verschmolzen. Dadurch begrenzen die beiden Gefässkörper gemeinsam einen gasgefüllten Zwischenraum 5. Die Gefässkörper bilden also mit dem äusseren Boden 21, der äusseren Seitenwand 22, dem inneren Boden 31 und der inneren Seitenwand 32 Begrenzungswände für den Zwischenraum. In einer dieser Begrenzungswände, hier im äusseren Boden 21, ist eine Druckausgleichsöffnung 24 vorhanden. Im vorliegenden Beispiel weist diese einen Durchmesser von ca. 1.5 bis 3.5 mm auf. Da die Gefässkörper aus Glas bestehen, können Form und Abmessungen dieser Druckausgleichsöffnung selbst innerhalb einer Fertigungsserie erheblichen Schwankungen unterliegen. Die Druckausgleichsöffnung ist jedoch in jedem Fall genügend gross, um beim Verschmelzen der Gefässkörper einen schnellen Druckausgleich zwischen dem Zwischenraum und dem Aussenraum zu ermöglichen.

Nach dem Verbinden der Gefässkörper wird diese Druckausgleichsöffnung mit einem Stopfen 4 verschlossen. Dieser weist die Form einer flachen, kreisrunden Scheibe auf, die einen zentralen zapfenartigen Hauptabschnitt 42 aufweist, welcher sich in die Druckausgleichsöffnung hinein erstreckt. Der Aussendurchmesser d des Hauptabschnitts beträgt im vorliegenden Beispiel ca. 1.5 mm. Er ist dabei überall kleiner als der Innendurchmesser D der Druckausgleichsöffnung, selbst unter Berücksichtigung der Fertigungstoleranzen. Von diesem zapfenartigen Hauptabschnitt aus erstreckt sich ein scheibenartiger Befestigungsflansch 43 lateral nach aussen und liegt flach auf der Aussenseite des Bodens 21 auf. Dieser Befestigungsflansch 43 ist mittels eines Klebemittels mit dem Boden 21 verklebt.

Der Hauptabschnitt 42 weist einen zentralen Gasdurchtrittskanal 41 auf. Dieser Kanal wurde ausgebildet, indem der Hauptabschnitt mit einer Nadel mit einem Durchmesser von z.B. ca. 0.6 mm durchstossen wurde. Andere Abmessungen der Nadel sind selbstverständlich möglich. Nachdem die Nadel zurückgezogen wurde, ist der Gasdurchtrittskanal im Wesentlichen wieder aufgrund der elastischen Eigenschaften des Stopfenmaterials verschlossen. Bei Druckunterschieden zwischen dem Zwischenraum und dem Aussenraum ermöglicht die Elastizität des Materials jedoch, dass sich der Kanal genügend aufweitet, um einen Gasdurchtritt zu ermöglichen.

Der Stopfen besteht bevorzugt aus einem Kunststoff auf Silikonbasis, im vorliegenden Beispiel aus Silikon mit einer Härte von Shore A 70. Der Stopfen wurde mittels Spritzgussverfahren hergestellt. Aufgrund seiner hydrophoben Eigenschaften und der daraus resultierenden negativen Kapillarwirkung verhindert der Stopfen trotz der Anwesenheit des Gasdurchtrittskanals ein Eindringen von Wasser in den Zwischenraum 5. Dies ist selbst unter den aggressiven chemischen Bedingungen in einer Geschirrspülmaschine und beim Abwaschen von Hand mit oder ohne Spülmittel der Fall. Wird heisses Wasser in das Gefäss gegeben, so kann die sich ausdehnende Luft im Zwischenraum 5 durch den Gasdurchtrittskanal 41 entweichen und beim Abkühlen entsprechend wieder eindringen.

Um den Stopfen am Boden 21 zu befestigen, wurde ein silikonbasierter Klebstoff eingesetzt, im vorliegenden Beispiel insbesondere ein Klebstoff auf der Basis von Acetoxy-Silikon, wie er zum Beispiel von dem Unternehmen Henkel Loctite Europe unter der Bezeichnung Loctite™ 5366 erhältlich ist. Dieser Klebstoff weist einerseits eine sehr gute Haftung auf dem Silikonmaterial des Stopfens auf, andererseits ermöglicht er eine sehr gute Verbindung mit dem Glasmaterial des äusseren Gefässkörpers.

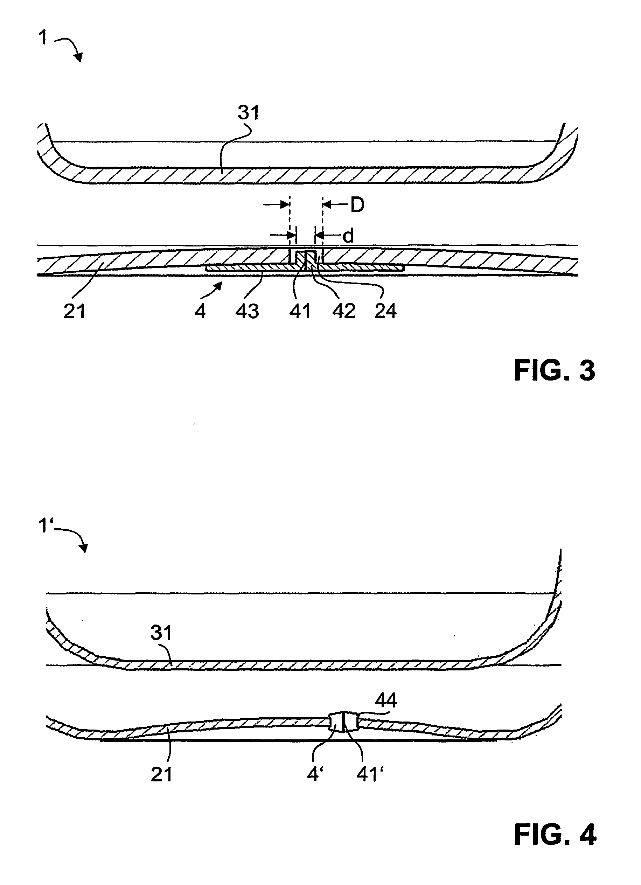

Eine alternative Ausführungsform ist in der Fig. 4 dargestellt. Im Gegensatz zur ersten Ausführungsform ist hier die Druckausgleichsöffnung nicht zentral im Boden 21 angeordnet, sondern versetzt zur Mittelachse des Gefässes. Der Stopfen 4' hat eine im Wesentlichen zylindrisch-scheibenförmige Grundform. Auf der zylindrischen Mantelfläche ist eine umlaufende Ringnut 44 ausgebildet, in welche ein Bereich des Bodens 21, welcher die Druckausgleichsöffnung begrenzt, hineinragt. Der Stopfen 4' ist also mit Hilfe dieser Nut zumindest teilweise formschlüssig im Bereich der Druckausgleichsöffnung im Boden 21 gehalten. Zusätzlich ist der Stopfen 4' auch noch mit dem Boden 21 im Bereich der Ringnut verklebt. Der Gasdurchtrittskanal 41' ist in derselben Weise wie bei der ersten Ausführungsform gebildet, indem eine Nadel durch den zumindest teilweise ausgehärteten Stopfen 4' hindurchgestossen wurde. Im Vergleich zur ersten Ausführungsform erfordert die zweite Ausführungsform weitaus geringere Toleranzen für die Form und Abmessungen der Druckausgleichsöffnung, da die Befestigung des Stopfens direkt im Bereich dieser Öffnung erfolgt.

Selbstverständlich sind eine Vielzahl von Abwandlungen möglich, und die Erfindung ist in keiner Weise auf die vorstehend diskutierten Ausführungsbeispiele beschränkt. So kann das doppelwandige Gefäss eine andere Form als die hier dargestellte Form eines hohen Trinkglases aufweisen, zum Beispiel als Tasse mit Henkel oder als Kanne mit Ausgiesstülle ausgebildet sein. Die durch den Stopfen verschlossene Druckausgleichsöffnung kann auch in einem anderen Bereich der Aussenwand des Gefässes vorhanden sein. Das Gefäss ist zwar vorzugsweise aus Glas gefertigt, kann jedoch auch aus einem anderen Material gefertigt sein. Entsprechend sind auch andere Materialien für den Stopfen und für das Klebemittel denkbar. Statt nur eines einzigen Gasdurchtrittskanals können auch mehrere solche Kanäle ausgebildet sein.

## Patentansprüche

1. Doppelwandiges Gefäss (1) mit einem äusseren Gefässkörper (2) und einem inneren Gefässkörper (3), welcher derart im äusseren Gefässkörper (2) angeordnet ist, dass zwischen dem inneren und dem äusseren Gefässkörper ein gasgefüllter Zwischenraum (5) ausgebildet ist, wobei in einer Begrenzungswand (21) mindestens eines der Gefässkörper eine Druckausgleichsöffnung (24) vorhanden ist, welche durch einen Stopfen (4; 4') verschlossen ist, **dadurch gekennzeichnet, dass** der Stopfen mindestens einen Gasdurchtrittskanal (41; 41') aufweist, der einen Durchlass von Luft erlaubt und ein Eindringen von Wasser in den Zwischenraum verhindert.

2. Doppelwandiges Gefäss nach Anspruch 1, wobei der Stopfen (4, 4') aus einem hydrophoben Material gefertigt ist.

3. Doppelwandiges Gefäss nach einem der vorhergehenden Ansprüche, wobei der Stopfen (4; 4') aus einem silikonbasierten Kunststoff gefertigt ist.

4. Doppelwandiges Gefäss nach Anspruch 3, wobei der Stopfen (4; 4') mit einem Klebemittel auf Acetoxy-Silikonbasis am Gefässkörper (2) befestigt ist.

5. Doppelwandiges Gefäss nach einem der vorhergehenden Ansprüche, wobei der Gasdurchtrittskanal (41; 41') selbstverschliessend ausgebildet ist.

6. Doppelwandiges Gefäss nach einem der vorhergehenden Ansprüche, wobei der Stopfen (4) einen sich in die Druckausgleichsöffnung (24) hinein erstreckenden Hauptabschnitt (42) umfasst, durch welchen hindurch sich der Gasdurchtrittskanal (41) erstreckt, sowie einen den Hauptabschnitt lateral umgebenden Befestigungsflansch (43), welcher zumindest bereichsweise flach auf der Wand (21) des Gefässkörpers (2) aufliegt und vorzugsweise mit dieser Wand verklebt ist.

7. Doppelwandiges Gefäss nach Anspruch 6, wobei der Hauptabschnitt (42) einen maximalen Aussendurchmesser (d) aufweist, welcher kleiner ist als ein minimaler Innendurchmesser (D) der Druckausgleichsöffnung (24), so dass zwischen dem Hauptabschnitt (42) und einem die Druckausgleichsöffnung (42) begrenzenden Wandbereich des Gefässkörpers (2) ein lateraler Zwischenraum vorhanden ist.

8. Doppelwandiges Gefäss nach einem der Ansprüche 1 bis 5, wobei der Stopfen (4') eine umlaufende Ringnut (44) aufweist, in welcher ein die Druckausgleichsöffnung (42) begrenzender Wandbereich des Gefässkörpers (2) hineinragt.

9. Verfahren zur Herstellung eines doppelwandigen Gefässes, umfassend:
Bereitstellen eines äusseren Gefässkörpers (2) und eines inneren Gefässkörpers (3), wobei in einer Begrenzungswand (21) mindestens eines der Gefässkörper eine Druckausgleichsöffnung (24) vorhanden ist;
Anordnen des inneren Gefässkörpers im äusseren Gefässkörper und Verbinden der Gefässkörper (2, 3) derart, dass zwischen den Gefässkörpern ein gasgefüllter Zwischenraum (5) entsteht, wobei während des Verbindens ein Gasdurchtritt durch die Druckausgleichsöffnung ermöglicht wird;
Verschliessen der Druckausgleichsöffnung mit einem Stopfen (4; 4'), welcher mindestens einen Gasdurchtrittskanal (41; 41') aufweist, der einen Durchlass von Luft erlaubt, während er einen Durchlass von Wasser verhindert.

10. Verfahren nach Anspruch 9, wobei der Stopfen (4; 4') aus einem elastischen Kunststoffmaterial hergestellt wird, indem das Kunststoffmaterial oder ein Vorläufer hiervon in flüssiger Form in eine Form eingefüllt wird, anschliessend aushärtet und wobei der Gasdurchtrittkanal (41; 41') erst ausgebildet wird, nachdem das Kunststoffmaterial mindestens teilweise ausgehärtet ist.

11. Verfahren nach Anspruch 9 oder 10, wobei der Gasdurchtrittskanal (41, 41') ausgebildet wird, indem der Stopfen (4; 4') mittels einer Nadel durchstossen wird.

## Claims

1. A double-walled vessel (1) comprising an outer vessel body (2) and an inner vessel body (3) arranged in the outer vessel body (2) in such a way that a gas-filled interspace (5) is formed between the inner and the outer vessel body, a pressure compensation opening (24) being present in a limit wall (21) of at least one of the vessel bodies, the pressure compensation opening being sealed by a plug (4; 4'), **characterized in that** the plug has at least one gas passage channel (41; 41'), which allows a passage of air and prevents water from penetrating into the interspace.

2. The double-walled vessel as claimed in claim 1, wherein the plug (4; 4') is made from a hydrophobic material.

3. The double-walled vessel as claimed in one of the preceding claims, wherein the plug (4; 4') is made from a silicone-based synthetic material.

4. The double-walled vessel as claimed in claim 3, wherein the plug (4; 4') is fastened to the vessel body (2) with an acetoxy-silicone-based adhesive.

5. The double-walled vessel as claimed in one of the preceding claims, wherein the gas passage channel (41; 41') is of self-sealing configuration.

6. The double-walled vessel as claimed in one of the preceding claims, wherein the plug (4) comprises a main portion (42), which extends into the pressure compensation opening (24) and through which the gas passage channel (41) extends, and a fastening flange (43), which laterally surrounds the main portion and which, at least in some areas, rests flat on the wall (21) of the vessel body (2) and is preferably glued to this wall.

7. The double-walled vessel as claimed in claim 6, wherein the main portion (42) has a maximum outer diameter (d) which is smaller than a minimum inner diameter (D) of the pressure compensation opening (24), so that a lateral gap is present between the main portion (42) and a wall region of the vessel body (2) which delimits the pressure compensation opening (42).

8. The double-walled vessel as claimed in one of claims 1 to 5, wherein the plug (4') has a circumferential annular groove (44), into which a wall region of the vessel body (2), which delimits the pressure compensation opening (42), projects.

9. A method for producing a double-walled vessel, comprising:
providing an outer vessel body (2) and an inner vessel body (3), a pressure compensation opening (24) being present in a limit wall (21) of at least one of the vessel bodies;
arranging the inner vessel body in the outer vessel body and connecting the vessel bodies (2, 3) such that a gas-filled interspace (5) is formed between the vessel bodies, a passage of gas through the pressure compensation opening being enabled during the connection;
sealing the pressure compensation opening with a plug (4; 4'), said plug having at least one gas passage channel (41; 41') which allows a passage of air, while preventing a passage of water.

10. The method as claimed in claim 9, wherein the plug (4; 4') is produced from an elastic synthetic material, the synthetic material or a precursor thereof being poured in liquid form into a mold and then cured, and wherein the gas passage channel (41; 41') is formed only after the synthetic material has been at least partially cured.

11. The method as claimed in claim 9 or 10, wherein the gas passage channel (41; 41) is formed by piercing of the plug (4; 4') by means of a needle.

## Revendications

1. Récipient à double paroi (1) comprenant un corps de récipient extérieur (2) et un corps de récipient intérieur (3), qui est disposé dans le corps de récipient extérieur (2) de telle sorte qu'entre le corps de récipient intérieur et le corps de récipient extérieur soit réalisé un espace intermédiaire (5) rempli de gaz, dans une paroi de limitation (21) d'au moins l'un des corps de récipient étant prévue une ouverture de compensation de la pression (24) qui est fermée par un bouchon (4 ; 4'), **caractérisé en ce que** le bouchon présente au moins un canal de passage de gaz (41 ; 41') qui permet un passage d'air et qui empêche une pénétration d'eau dans l'espace intermédiaire.

2. Récipient à double paroi selon la revendication 1, dans lequel le bouchon (4, 4') est fabriqué en un matériau hydrophobe.

3. Récipient à double paroi selon l'une quelconque des revendications précédentes, dans lequel le bouchon (4 ; 4') est fabriqué en un plastique à base de silicone.

4. Récipient à double paroi selon la revendication 3, dans lequel le bouchon (4 ; 4') est fixé avec un adhésif à base d'acétoxysilicone sur le corps de récipient (2),

5. Récipient à double paroi selon l'une quelconque des revendications précédentes, dans lequel le canal de passage de gaz (41 ; 41') est réalisé de manière auto-fermante.

6. Récipient à double paroi selon l'une quelconque des revendications précédentes, dans lequel le bouchon (4) comprend une portion principale (42) s'étendant dans l'ouverture de compensation de la pression (24), à travers laquelle s'étend le canal de passage de gaz (41), ainsi qu'une bride de fixation (43) entourant latéralement la portion principale, qui repose au moins en partie à plat sur la paroi (21) du corps de récipient (2) et qui est de préférence collée à cette paroi.

7. Récipient à double paroi selon la revendication 6, dans lequel la portion principale (42) présente un diamètre extérieur maximal (d) qui est inférieur à un diamètre intérieur minimal (D) de l'ouverture de compensation de la pression (24), de sorte qu'entre la portion principale (42) et une région de paroi du corps de récipient (2) limitant l'ouverture de compensation de la pression (24), soit prévu un espace intermédiaire latéral.

8. Récipient à double paroi selon l'une quelconque des revendication 1 à 5, dans lequel le bouchon (4') présente une rainure annulaire périphérique (44) dans laquelle pénètre une région de paroi du corps de récipient (2) limitant l'ouverture de compensation de la pression (24).

9. Procédé de fabrication d'un récipient à double paroi, comprenant les étapes consistant à :
fournir un corps de récipient extérieur (2) et un corps de récipient intérieur (3), dans une paroi de limitation (21) d'au moins l'un des corps de récipient étant prévue une ouverture de compensation de la pression (24) ;
disposer le corps de récipient intérieur dans le corps de récipient extérieur et connecter les corps de récipient (2, 3) de telle sorte qu'entre les corps de récipient soit formé un espace intermédiaire (5) rempli de gaz, pendant la connexion, un passage de gaz à travers l'ouverture de compensation de la pression étant possible ;
fermer l'ouverture de compensation de la pression avec un bouchon (4 ; 4'), qui présente au moins un canal de passage de gaz (41 ; 41'), qui permet un passage d'air, tandis qu'il empêche un passage d'eau.

10. Procédé selon la revendication 9, dans lequel le bouchon (4 ; 4') est fabriqué en un matériau en plastique élastique en ce que le matériau en plastique ou un précurseur de celui-ci est versé sous forme liquide dans un moule, puis est durci, et le canal de passage de gaz (41 ; 41') étant seulement réalisé après que le matériau en plastique a été au moins en partie durci.

11. Procédé selon à revendication 9 ou 10, dans lequel le canal de passage de gaz (41, 41') est réalisé en perçant le bouchon (4 ; 4') au moyen d'une aiguille.
